# EUROPEAN PATENT APPLICATION

(11) **EP 2 511 399 A1**
(43) Date of publication of application: **17.10.2012**
(21) Application number: 11753198.8
(22) Date of filing: 24.02.2011
(51) Int. Cl.: C25B 9/00, B01D 53/04, C25B 1/24

(54) **APPARATUS FOR GENERATING FLUORINE GAS**

(30) Priority: 02.02.2011 JP 2011020868; 09.03.2010 JP 2010051316
(71) Applicant: Central Glass Company, Limited, Yamaguchi 755-0001 (JP)
(72) Inventor: MIYAZAKI, Tatsuo, Yamaguchi 755-0001 (JP); YAO, Akifumi, Yamaguchi 755-0001 (JP); KITA, Takuya, Yamaguchi 755-0001 (JP)
(74) Representative: Manitz, Finsterwald & Partner GbR
(86) International application number: PCT/JP2011/054103
(87) International publication number: WO 2011/111538

(57) **Abstract**

To provide a fluorine gas generating system which can stably supply high purity fluorine gas while preventing blockade of a purification apparatus for adsorbing and removing hydrogen fluoride.

[Solving means] A fluorine gas generating system characterized by including a purification apparatus 20 for adsorbing and removing hydrogen fluoride vaporized from a molten salt of an electrolysis tank 1 and mixed in fluorine gas generated at an anode 7, in which the purification apparatus 20 includes a cylindrical member through which main-product gas containing fluorine gas generated in the electrolysis tank 1 flows, a temperature regulator for regulating temperature of the cylindrical member, and an adsorbent holder disposed inside the cylindrical member, the adsorbent holder being disposed to form an aperture for securing a flow passage of the main-product gas inside the cylindrical member.

## Description

### TECHNICAL FIELD

This invention relates to a fluorine gas generating system for generating fluorine gas.

### BACKGROUND TECHNIQUE

Hitherto the following fluorine gas generating system has been known: The fluorine gas generating system includes an electrolysis tank in which hydrogen fluoride is electrolyzed in an electrolysis bath including a molten salt containing hydrogen fluoride so that a main-product gas whose main component is fluorine gas is generated at an anode side while a by-product gas whose main component is hydrogen gas is generated at a cathode side.

In the fluorine gas generating system of this kind, hydrogen fluoride gas vaporized from the molten salt is mixed in fluorine gas generated at the anode of the electrolysis tank. Therefore, in order to separate hydrogen fluoride gas from gas generated at the anode so as to purify fluorine gas, a purification apparatus having a treatment cylinder filled with adsorbent such as sodium fluoride (NaF) or the like is provided.

Fluorine and hydrogen gases generated from the electrolysis tank contain hydrogen fluoride vaporized from the molten salt contained in the electrolysis tank and mist components of the molten salt itself. These components cause deterioration of the adsorbent. Particularly with hydrogen fluoride having a high concentration, the adsorbent near a treatment cylinder inlet may make its expansion or fusion, thereby resulting in clogging of the adsorbent. When such clogging arises, flow of gas is suppressed thereby causing a blockade, which is problematic.

As a technique for solving this problem, Patent Citation 1 discloses such a technique that a separating means is provided to form a space between a gas introduction opening and adsorbent in a purification apparatus filled with the adsorbent such as sodium fluoride (NaF) or the like, in which liquid drops of the mist components are released and settled within this space, thus forming a configuration in which the adsorbent and the liquid drops of the mist components are hard to contact with each other, thereby suppressing clogging of the adsorbent and reducing the frequency of maintenance of the purification apparatus.

### PRIOR ART CITATIONS

### PATENT CITATION

Patent Citation 1: Japanese Patent Provisional Publication No. 2009-215588

### SUMMARY OF THE INVENTION

### PROBLEMS TO BE SOLVED BY INVENTION

However, in case that the fluorine gas generating system is operated for a long time or in case that the flow rate of generated gas is large, the amount of hydrogen fluoride gas and mist components contacting with the adsorbent increases with the prolonged operation time of the system or the increased amount of the gas and mist components. Therefore, in a configuration using the purification apparatus which is compactly filled with the adsorbent as described in Patent Citation 1, if clogging of the adsorbent once arises, flow path for gas cannot be secured so as to block the purification apparatus, thus interrupting a continuous operation of the fluorine gas generating system, which is problematic.

Thus, it is difficult to completely prevent blockade inside the purification apparatus with a configuration of being compactly filled with adsorbent for adsorbing hydrogen fluoride in a purification apparatus for adsorbing and removing hydrogen fluoride contained in fluorine gas and hydrogen gas generated in an electrolysis tank of a conventional fluorine gas generating system.

The present invention has been made in view of the above problems and has an object to provide a fluorine gas generating system which can stably supply high purity fluorine gas while preventing blockade of a purification apparatus for adsorbing and removing hydrogen fluoride.

The present inventors have made eager studies in order to solve the above-discussed problems. As a result, they have found to be able to stably supply high purity fluorine gas while preventing blockade within a purification apparatus by providing an adsorbent holder inside a cylindrical member disposed in the purification apparatus for adsorbing and removing hydrogen fluoride and allowing gas generated in an electrolysis tank to flow therethrough, and further by disposing this adsorbent holder in such a manner as to form an aperture for securing a gas flow passage for gas flowing through the inside of the cylindrical member, in an inside space of the cylindrical member, and reached the present invention.

That is, the present invention is a fluorine gas generating system for generating fluorine gas by electrolyzing hydrogen fluoride in a molten salt containing hydrogen fluoride, characterized by comprising: an electrolysis tank in which hydrogen fluoride is electrolyzed in an electrolysis bath including the molten salt containing hydrogen fluoride to generate a main-product gas whose main component is fluorine gas at an anode side and a by-product gas whose main component is hydrogen gas at a cathode side; and a purification apparatus in which hydrogen fluoride mixed in the main-product gas is removed by an adsorbent, wherein the purification apparatus includes a cylindrical member through which the main-product gas passes, a temperature regulator for regulating a temperature of the cylindrical member, and an adsorbent holder disposed inside the cylindrical member, the adsorbent holder being disposed to form an aperture for securing a flow passage of the main-product gas inside the cylindrical member.

Additionally, the present invention is a fluorine gas generating system characterized in that the adsorbent holder includes plural or more adsorbent holders disposed to meander the flow passage of the main-product gas.

Additionally, the present invention is a fluorine gas generating system characterized in that the adsorbent holder is a tray-like member, the tray-like member including a bottom plate section formed with a cutout section for allowing gas to flow therethrough, an outer periphery side wall section disposed standing at outer periphery of the bottom plate section except for the cutout section, and a cutout side wall section disposed standing at a cutout section side of the bottom plate section, and an upper end opening section of a main body of the tray-like member, and in that the outer periphery side wall section is disposed to internally contact with inner wall of the cylindrical member.

Additionally, the present invention is a fluorine gas generating system characterized in that the bottom plate section is formed with a through-hole.

Additionally, the present invention is a fluorine gas generating system characterized in that the adsorbent holder includes plural or more adsorbent holders disposed separate from each other in the cylindrical member, wherein a distance between the tray-like member and the adjacent tray-like member is not less than 1/5 of inner diameter of the cylindrical member and less than the inner diameter of the cylindrical member.

Additionally, the present invention is a fluorine gas generating system characterized in that an area of the bottom plate section formed with the cutout section is not less than 50 % and not more than 95 % of an area of an inner diameter section of the cylindrical member.

### EFFECTS OF THE INVENTION

According to the present invention, an aperture which is not filled with the adsorbent is formed inside the cylindrical member disposed in the purification apparatus and allowing gas generated in the electrolysis tank to flow therethrough, so as to provide a configuration for always securing a gas flow passage. Accordingly, the present invention can provide a fluorine gas generating system which can stably supply high purity fluorine gas without causing blockade even in case that a part of the adsorbent makes its clogging.

### BRIEF DESCRIPTION OF THE DRAWINGS

Fig. 1 is a schematic illustration of a fluorine gas generating system according to an embodiment of the present invention;
Fig. 2 is a diagrammatic illustration of a purification apparatus according to the embodiment of the present invention;
Fig. 3 is a cross-sectional view taken along the line A-A of Fig. 2;
Fig. 4 is a view showing an example of a tray-like member according to the embodiment of the present invention; and
Fig. 5 is a diagrammatic illustration of an experimental apparatus with which a purification performance test of a purification apparatus applicable to the embodiment of the present invention was carried out.

### BEST MODE FOR CARRYING OUT THE INVENTION

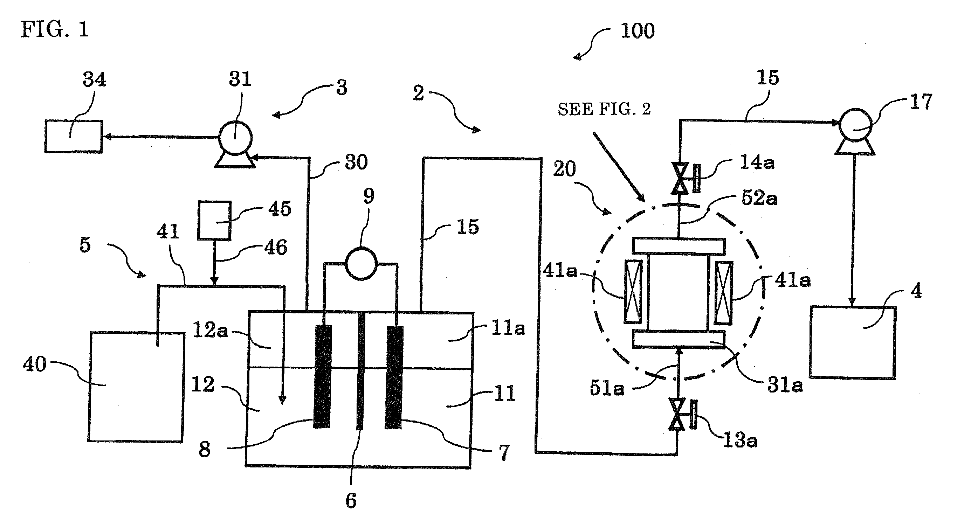

Hereinafter, an embodiment of the present invention will be discussed with reference to drawings. A fluorine gas generating system 100 according to the embodiment of the present invention will be discussed with reference to Fig. 1.

The fluorine gas generating system 100 is configured to generate fluorine gas by electrolysis and supply the generated fluorine gas to an outside apparatus 4. The outside apparatus 4 is, for example, a semiconductor production equipment, in which fluorine gas is used, for example, as cleaning gas in a production process for semiconductor.

The fluorine gas generating system 100 includes an electrolysis tank 1 for generating fluorine gas under electrolysis, a fluorine gas supply system 2 for supplying the outside apparatus 4 with fluorine gas generated from the electrolysis tank 1, and a by-product gas treating system 3 for treating by-product gas generated with generation of fluorine gas.

First, the electrolysis tank 1 will be discussed. A molten salt containing hydrogen fluoride (HF) is stored in the electrolysis tank 1. In this embodiment, a mixture of hydrogen fluoride and potassium fluoride (KF) is used as the molten salt.

The inside of the electrolysis tank 1 is divided into an anode chamber 11 and a cathode chamber 12 by a dividing wall 6 dipped in the molten salt. An anode 7 and a cathode 8 are dipped respectively in the molten salt of the anode chamber 11 and the molten salt of the cathode chamber 12. By supplying electric current to between the anode 7 and the cathode 8 from an electric power source 9, a main-product gas whose main component is fluorine gas (F₂) is generated at the anode 7 while a by-product gas whose main component is hydrogen gas (H₂) is generated at the cathode 8. A carbon electrode is used as the anode 7 while soft metal, Monel or nickel is used as the cathode 8.

A first gas chamber 11a to which fluorine gas generated at the anode 7 is introduced and a second gas chamber 12a to which hydrogen gas generated at the cathode 8 is introduced are divided on the liquid surface of the molten salt in the electrolysis tank 1 in such a manner that each gas is prevented from transferring between the gas chamber 11a and the gas chamber 12a. Thus, the first gas chamber 11a and the second gas chamber 12 are completely separated from each other by the dividing wall 6 in order to prevent fluorine gas and hydrogen gas from reacting with each other under mixing and contacting with each other. In contrast, the molten salt in the anode chamber 11 and the molten salt in the cathode chamber 12 are not separated from each other by the dividing wall 6 so as to be communicated with each other through the lower side of the dividing wall 6.

Since the melting point of KF-2HF is 71.7 °C, the temperature of the molten salt is adjusted at 91 to 93 °C. Hydrogen fluoride vaporizes from the molten salt by an amount corresponding to a vapor pressure and mixed into each of fluorine gas and hydrogen gas which are respectively generated at the anode 7 and the cathode 8 of the electrolysis tank 1. Thus, fluorine gas is contained in each of fluorine gas generated at the anode 7 and introduced into the first gas chamber 11a and hydrogen gas generated at the cathode 8 and introduced into the second gas chamber 12a.

Next, the fluorine gas supply system 2 will be discussed. A first main passage 15 is connected to the first gas chamber 11a to supply fluorine gas to the outside apparatus 4.

A first pump 17 is disposed in the first main passage 15 to introduce fluorine gas outside the first chamber 11a and convey fluorine gas. A displacement pump such as a bellows pump, a diaphragm pump or the like is used as the first pump 17. A purification apparatus 20 is disposed in a part of the first main passage 15 upstream of the first pump 17 to trap hydrogen fluoride mixed in fluorine gas so as to purify fluorine gas. The purification apparatus 20 will be discussed in detail after.

Next, the by-product gas treatment system 3 will be discussed. A second main passage 30 is connected to the second gas chamber 12a to discharge hydrogen gas to outside.

A second pump 31 is disposed in the second main passage 30 to introduce hydrogen gas outside the second gas chamber 12a and convey hydrogen gas. A de-toxifying section 34 is disposed in a part of the second main passage 30 downstream of the second pump 31 so that hydrogen gas conveyed by the second pump 31 is made harmless by the de-toxifying section 34 and released.

The fluorine gas generating system 100 includes a raw material supply system 5 to supply and supplement hydrogen fluoride as a raw material of fluorine gas into the molten salt in the electrolysis tank 1. Hereinafter, the raw material supply system 5 will be discussed.

The electrolysis tank 1 is connected through a raw material supply passage 41 to a hydrogen fluoride supply source for storing hydrogen fluoride to be supplemented to the electrolysis tank 1. Hydrogen fluoride stored in the hydrogen fluoride supply source 40 is supplied into the molten salt in the electrolysis tank 1 through the raw material supply passage 41.

Additionally, a carrier gas supply passage 46 is connected to the raw material supply passage 41 to introduce a carrier gas supplied from a carrier gas supply source 45 into the raw material supply passage 41. The carrier gas is a gas for introduce hydrogen fluoride into the molten salt, in which nitrogen gas which is an inert gas is used as the carrier gas. Nitrogen gas is supplied into the molten salt in the cathode chamber 12 and discharged from the second gas chamber 12a through the second main passage 30, in which nitrogen hardly dissolves in the molten salt.

Next, the purification apparatus 20 will be discussed. The purification apparatus 20 is an apparatus for allowing hydrogen fluoride mixed in fluorine gas to be adsorbed to an adsorbent such as sodium fluoride (NaF) or the like thereby to remove hydrogen fluoride mixed in fluorine gas.

An inlet line 51a for introducing fluorine gas generated at the anode 7 and an outlet line 52a for introducing fluorine gas outside the purification apparatus 20 are connected to the purification apparatus 20. Additionally, the purification apparatus 20 includes a cylindrical member 31a through which fluorine gas passes, and an adsorbent holder is disposed inside the cylindrical member 31a to hold the adsorbent for adsorbing hydrogen fluoride.

The cylindrical member referred to here represents a container for accommodating thereinside the adsorbent for adsorbing hydrogen fluoride, for allowing fluorine gas generated from the electrolysis tank 1 to pass therethrough and for adsorbing and removing hydrogen fluoride in fluorine gas, in which the shape of the cylindrical member is not particularly limited. The material of the cylindrical member is preferably one having a resistance characteristics to fluorine gas and hydrogen fluoride gas, for example, alloy or metal such as stainless steel, Monel, nickel or the like.

Many porous beads formed of sodium fluoride (NaF) are used as the adsorbent. The adsorbing ability of sodium fluoride changes according to temperature, and therefore a heater 41a is disposed around the cylindrical member 31a so as to serve as a temperature regulator for regulating the temperature inside the cylindrical member 31a.

The temperature regulator is not particularly limited as far as it can regulate the temperature inside the cylindrical member. For example, a heating or cooling device using a heater, steam heating, heating medium or cooling medium may be used.

Chemical to be used as the adsorbent is preferably alkali metal fluoride such as NaF, KF, RbF, CsF or the like, in which NaF is particularly preferable.

The adsorbent holder is disposed to form an aperture for securing a gas flow passage inside the cylindrical member 31a. By this, even in case that a part of the adsorbent makes its clogging, blockade does not occur structurally thereby allowing gas to flow.

The adsorbent holder referred to here represents one which is disposed inside the cylindrical member of the purification apparatus and accommodates and hold a certain amount of the adsorbent in a space inside the cylindrical member. Additionally, a plurality of the adsorbent holders may be disposed at regular intervals.

Further, in order to increase the rate of surface area of the adsorbent contacting with gas flowing inside the cylindrical member, it is preferable that the adsorbent holder is formed with through-hole(s). The through-holes referred to here are not particularly limited and suitably designed as far as they have such sizes as to allow gas to pass therethrough. Additionally, the adsorbent holder is preferably porous or mesh-like, taking account of the rate of surface area of the adsorbent contacting with gas.

The specific shape of the adsorbent holder is not particularly limited as far as the adsorbent holder can secure the gas flow passage inside the cylindrical member and accommodate and hold the adsorbent. Examples of the specific shape are, for example, a mode in which the adsorbent is filled in a cylindrical basket-shaped member formed of wire netting (mesh-shaped), a mode in which the adsorbent is filled in a tray-like member such as a tray-like container, a mode in which the adsorbent is interposed between sheet-like metals (including mesh-shaped ones), and the like.

The method of disposing the adsorbent holder in the cylindrical member of the purification apparatus is not particularly limited as far as the adsorbent holder is disposed to form the aperture for securing a gas flow passage inside the cylindrical member. Examples of the method are, for example, a method for hanging the adsorbent holder of the above-discussed modes within the space inside the cylindrical member, a method for disposing the adsorbent holder to be fixed to the inner wall of the cylindrical member, and the like.

Thus, by using the adsorbent holder to be disposed to form the aperture for securing a gas flow passage inside the cylindrical member, even in case that a part of the adsorbent makes its clogging, the gas flow passage can be always secured inside the cylindrical member, thereby preventing blockade and making it possible to effectively carry out purification of gas.

The adsorbent holder is particularly preferably the tray-like member taking account of practical treatments such as workability during formation of through-holes in the adsorbent holder, disposing the adsorbent holder to the cylindrical member, easiness of filling the adsorbent to the adsorbent holder, and the like. The tray-like member referred to here represents a flat container for accommodating therein an object. The shape of the tray-like member is not particularly limited to a generally circular shape, a generally rectangular shape or the like, and therefore suitably designed according to the shape of the cylindrical member.

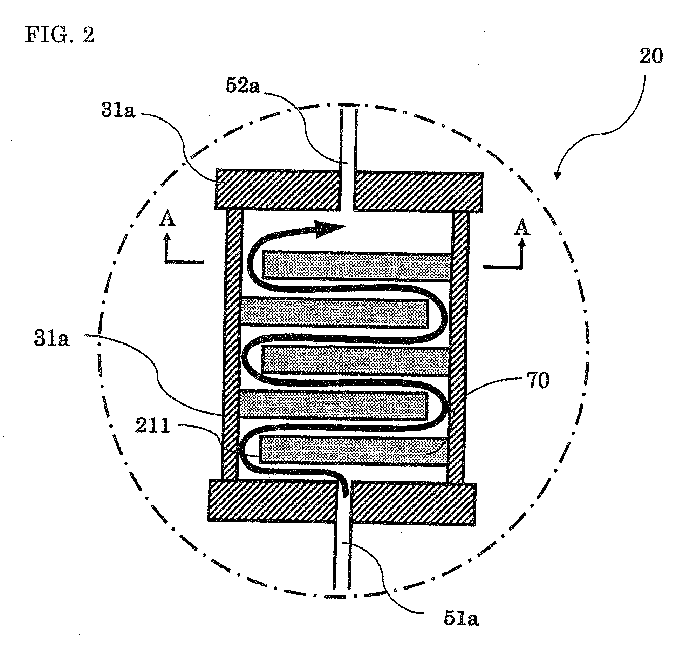

Hereinafter, the tray-like member is given as a preferable example of the adsorbent holder, and the purification apparatus 20 in which the tray-like member is disposed will be discussed with reference to Fig. 2. It is to be noted that explanation will be made upon using the tray-like member as an example of the adsorbent bolder; however, the adsorbent holder in the present invention is not limited to the tray-like member.

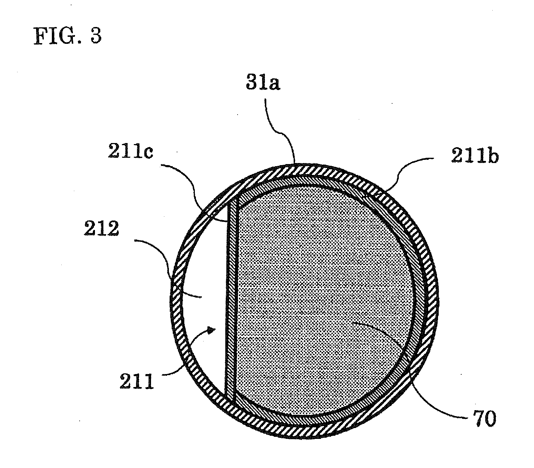

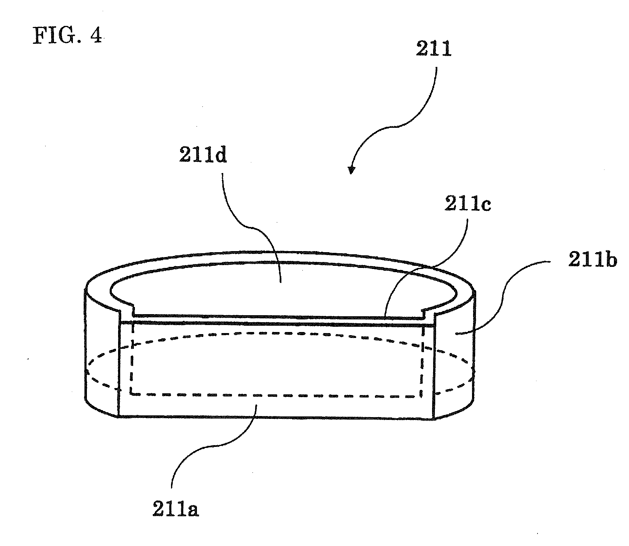

Additionally, Fig. 3 shows a A-A cross-sectional view of the purification apparatus 20. Additionally, Fig. 4 is a view showing an example of the structure of the tray-like member to be used as the adsorbent holder.

First, the outline of the purification apparatus 20 in which the tray-like member is disposed will be discussed with reference to Figs. 2 and 3. As shown in Figs. 2 and 3, a part of the tray-like member 211 is fixed to the inner wall of the cylindrical member 31a disposed in the purification apparatus 20. Additionally, a part of the tray-like member 211 is formed with a cutout section 212 through which gas is allowed to flow. By forming this cutout section 212, gas can always flow thereby providing a structure in which complete blockade cannot occur. It is to be noted that the adsorbent 70 is filled in the tray-like member 211.

The position of the tray-like member 211 fixed to the inner wall of the cylindrical member 31a is not particularly limited as far as flow of gas can be secured, in which it is preferable to allow gas and the adsorbent to sufficiently contact with each other thereby to improve a purification efficiency of gas. For example, as shown in Fig. 2, two or more tray-like members 211 are preferably alternately disposed to the inner wall of the cylindrical member 31a in such a manner that the cutout sections 212 are located alternately left and right in a flow direction of from the inlet of gas to the outlet of the gas in the cylindrical member 31a. By taking such a configuration, the flow of gas is meandered, so that the distance of from the inlet of gas to the flow passage of the outlet of gas can be increased inside the cylindrical member 31a, thereby making it possible to largely improve a purification efficiency of gas.

Additionally, in case that the two or more tray-like members are disposed separate from each other, it is preferable that the distance of the tray-like member 211 and the tray-like member located adjacent the former tray-like member is 1/5 or more of the inner diameter of the cylindrical member 31a and not more than the inner diameter of the cylindrical member. If this distance is less than 1/5, gas may not flow smoothly. If this distance is more than the inner diameter, the flow of gas cannot be sufficiently meandered so that gas cannot be sufficiently allowed to contact with the adsorbent.

The number (number of stages) of the tray-like members 211 is preferably plural (see Example 1 discussed after) in order to completely prevent blockade of the purification apparatus and to improve an adsorbing ability of hydrogen fluoride; however, the number is preferably suitably set according to the amount of hydrogen fluoride to be adsorbed, the condition of the purification apparatus to be used such as the size of the apparatus and the like.

Additionally, the size and the arrangement condition of the tray-like member 211 are not particularly limited as far as the flow of gas is not prevented, and therefore preferably suitably set according to the conditions such as the size and the like of the cylindrical member in which the tray-like member is disposed.

Next, an example of the structure of the tray-like member in the present invention will be discussed in detail with reference to Fig. 4.

As shown in Fig. 4, the tray-like member 211 of the present invention includes a bottom plate section 211a formed with the cutout section 212 for allowing gas to flow, an outer periphery side wall section 211b which is formed standing along the outer periphery of the bottom plate section 211a except for the cutout portion 211, a cutout side wall section 211c which is formed standing at the side of the cutout section of the bottom plate section 211a, and an upper end opening section 211d of the main body of the tray-like member 211.

Additionally, as shown in Fig. 3, it is preferable that the tray-like member 211 is disposed in such a manner that the outer periphery side wall section 211b of the tray-like member 211 except for the cutout section 212 is internally in contact with the inner wall of the cylindrical member 31a. With such a configuration, the amount of the adsorbent 70 to be filled can be increased, and gas and the adsorbent can be sufficiently contacted with each other, so that the purification efficiency of gas can be further improved.

The position of the tray-like member 211 formed with the cutout section 212, to be disposed in the space inside the cylindrical member 31a is not particularly limited as far as the tray-like member has a shape for securing flow of gas, and therefore is suitably designed. For example, in order that a sufficient amount of the adsorbent 70 to be filled is accommodated and that gas is allowed to sufficiently efficiently flow, the area of the bottom wall section 211a formed with the cutout section 212 is not less than 50 %, preferably 50 to 95 % and more preferably 85 to 95 % of the area of the inner diameter section (cross-sectional area on a plane including the inner diameter) of the cylindrical member 31a. If it is less than 50 %, a sufficient amount of the adsorbent 70 cannot be accommodated while flow of gas cannot be meandered, so that gas cannot be sufficiently brought into contact with the adsorbent. In contrast, if it is more than 95 %, a pressure loss become large so that gas cannot smoothly flow, which is not desirable.

Additionally, the method of arranging and fixing the tray-like member 211 in the space inside the cylindrical member 31a is not particularly limited as far as flow of gas can be secured, in which the plural tray-like members 211 are arranged to contact with each other or arranged to separate from each other. For example, in such cases that the plural tray-like members 211 are arranged and fixed upon being contacted with each other and being laid one upon another in such a manner that the cutout sections 212 are located alternately left and right, the cutout side wall section 211c may be smaller in height than the outer periphery side wall section 211b so that a flow passage of gas can be secured under the action of an aperture formed by this height difference. With such a configuration, since it is sufficient to lay the tray-like members 211 one upon another, there is such an advantage that a trouble for separately fixing the tray-like member 211 to the inner wall of the cylindrical member 31a is omitted.

Additionally, in order to increase the surface area of the adsorbent to be contacted with gas and to improve the efficiency of adsorption, through-holes may be suitably formed in members for constituting the tray-like member 211. The through-hole may be formed in all the members for constituting the tray-like member 211. In order to increase the surface area of the adsorbent to be contacted with gas, it is preferable to form the through-holes particularly in the bottom plate section 211a or the cutout side wall section 211c, in which it is preferable to take a configuration in which the through-holes are formed, for example, in the bottom plate section 211a and/or the cutout side wall section. With such a configuration, gas and the adsorbent can be sufficiently contacted with each other thereby further improving the purification efficiency of gas.

The method for forming the through-holes in the tray-like member 211 is not particularly limited, in which punching is, for example, given. Additionally, porous or mesh-like members may be used as the tray-like member formed with the through-holes. Particularly in order to increase the surface area between gas and the adsorbent, it is particularly preferable that the bottom plate section 211a is formed mesh-shaped (see Example 1 discussed after).

It is to be noted that, in case that the bottom plate section 211a is formed mesh-shaped, complete blockade can be prevented because a gas flow passage is secured in the cutout section 212 even if clogging occurs in a mesh-shaped part.

The material for constituting the tray-like member 211 is preferably one which is resistant to fluorine gas and hydrogen fluoride, for example, alloy and metal such as stainless steel, Monel, nickel and the like are given. Additionally, the same materials as the above-mentioned are preferably used even in case that the tray-like member is formed porous or mesh-shaped.

Next, flow of gas during operation of the fluorine gas generating system 100 of this embodiment will be discussed mainly on operation of the purification apparatus 20.

Fluorine gas generated at the anode 7 of the electrolysis tank 1 is introduced through the first main passage 15 to the purification apparatus 20, and then passes through the inlet valve 13a in an opened state and introduced from the inlet passage 51a provided to the cylindrical member 31a of the purification apparatus 20 to the inside of the cylindrical member 31a. At this time, the temperature inside the cylindrical member 31a is regulated by a heater 41a disposed around the cylindrical member 31a. The temperature inside the cylindrical member 31a is preferably suitably set according to a desired purity (the concentration of hydrogen fluoride in fluorine gas) of fluorine, in which it is preferable to set the temperature inside the cylindrical member 31a within a range of from 70 to 100 °C in order to control the concentration of hydrogen fluoride in fluorine gas introduced from the electrolysis tank 1 at a value of less than 1000 ppm.

Then, fluorine gas passes through the inside of the cylindrical member 31a provided with the adsorbent holder, in which fluorine gas is brought into contact with the adsorbent accommodated and held by the adsorbent holder provided inside the cylindrical member 31a while fluorine gas is adsorbed. At this time, fluorine gas passes through the aperture inside the cylindrical member, and then gas passed through the inside of the cylindrical member 31a is discharged through the outlet passage 52a to the outside of the purification apparatus 20 so as to be introduced into the outside apparatus 4 such as the semiconductor producing apparatus.

While generation of fluorine gas generated at the anode 7 of the electrolysis tank 1 has been discussed above, it is possible to purify hydrogen gas generated at the cathode 8 of the electrolysis tank 1 by using a purification apparatus having a similar configuration and carrying out similar operations.

Additionally, concerning the flow direction of gas passing through the purification apparatus 20, while a case in which the direction of gas flowing through the purification apparatus is from the lower section to the upper section has been shown in Figs. 1 and 2 in the above embodiment, the flow direction of gas passing through the purification apparatus is not particularly limited so that gas may be flown from the lower section to the upper section of the cylindrical member or from the upper section to the lower section of the cylindrical member.

With the above embodiment, effects discussed below can be obtained.

According to the embodiment of the present invention, the aperture which is filled with no adsorbent is formed inside the cylindrical member through which gas generated in the electrolysis tank provided to the purification apparatus, thereby taking a configuration in which a gas flow passage can be always secured. Accordingly, even in case that a part of the adsorbent makes its clogging, no blockade occur, thus providing the fluorine gas generating system which can stably supply high purity fluorine gas.

Further, according to the embodiment of the present invention, even in case that a part of the adsorbent makes its clogging, the remaining part of the adsorbent which is filled in the purification apparatus and has not yet made its clogging can be effectively utilized because a gas flow passage is always secured, thereby making it possible to effectively use the adsorbent.

It will be apparent that the present invention is not limited to the above embodiment, and that various changes and modifications may be made in the invention without departing from the spirit and scope thereof.

For example, two or more purification apparatuses may be disposed, in which they are used upon being switched from one to another. Additionally, the purification apparatus may be disposed at the side of the cathode for generating hydrogen gas, or the purification apparatuses may be disposed respectively at the side of the anode for generating fluorine gas and at the side of the cathode for generating hydrogen gas.

### INDUSTRIAL USABILITY

The present invention can be applied to a system for generating fluorine gas and reduce the load of maintenance operations for recovering and replacing adsorbent for adsorbing and removing hydrogen fluoride.

### EMBODIMENT

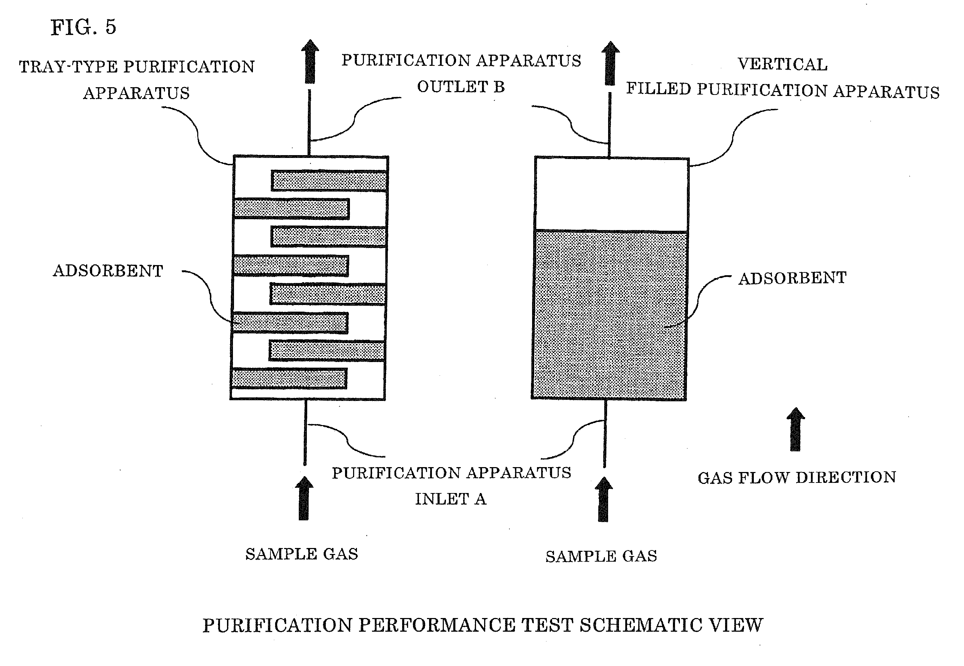

A purification performance test for a purification apparatus applicable to the embodiment of the present invention was conducted by using an apparatus as shown in Fig. 5. For the purification performance test, measurement of a differential pressure between an inlet A and an outlet B of the purification apparatus which was repeatedly used, and measurement of the concentration of hydrogen fluoride in gas at the outlet were carried out. Hereafter, the purification apparatus using a tray-type container as the tray-like member which is an example of the adsorbent holder is referred to as a tray-type purification apparatus and will be discussed.

Specifically, an adsorption step at which hydrogen fluoride is adsorbed in the adsorbent and a desorption step for desorption of hydrogen fluoride are repeatedly made, in which the differential pressure between the gas inlet A and the gas outlet B of the purification apparatus and the hydrogen fluoride concentration at the gas outlet B were measured at each of repeated cycles each of which includes the adsorption and desorption steps, measured results being shown in Table 1. It is to be noted that a case using a vertical filled purification apparatus in the same experimental conditions is shown as a comparative example. The vertical filled purification apparatus referred to here represents one in which the adsorbent was compactly filled as it is, inside the cylindrical member provided in the purification apparatus.

### [Example 1]

A generally circular tray-type container (formed of stainless steel and having an outer diameter of 80 mm) shown in Fig. 4 was used as the tray-like member, and a cutout section was formed at a part of the tray-type container in such a manner that the area of the bottom plate section of the tray-type container is 90 % of the area of the inner diameter section of the cylindrical member. Additionally, the tray-type container was machined to remove the bottom plate section to form an opening, upon which a mesh-shaped metal sheet was inserted into the opening, so that the container used was the tray-type container having a bottom plate section formed with through-holes (mesh-shaped) and a cutout side wall section formed with through-holes (mesh-shaped). It is to be noted that the material of the tray-type container used was stainless steel, and the cylindrical member used was cylindrical (having an inner diameter of 80 mm), the material of the cylindrical member being stainless steel.

As shown in Fig. 5, the tray-type containers of eight stages were disposed in such a manner that the positions of the cutout sections were located alternately left and right in the direction of from the inlet to outlet for gas and in such a manner as to be generally perpendicular to the inner wall of the cylindrical member, so that the flow of gas was meandered. Each tray-type container was disposed in such a manner that whole the outer periphery side wall section except for the cutout section was internally contacted with the inner wall of the cylindrical member. 80 g of sodium fluoride was filled as the adsorbent in each tray-type container (totally 640 g for the eight stages). Additionally, the temperature inside the cylindrical member was adjusted at 100 °C by a heater disposed on the outer periphery of the cylindrical member.

9% hydrogen fluoride gas diluted with nitrogen gas was flown as a sample gas through the purification apparatus at a flow velocity of 0.7 cm/sec. for 15 hours, in which the differential pressure between the gas inlet A and the gas outlet B of the purification apparatus was measured by a pressure gauge. Additionally, the hydrogen fluoride concentration at the gas outlet B after 15 hours gas flowing was analyzed by Fourier Transform Infrared Spectroscopy (FT-IR).

Next, the temperature inside the cylindrical member was adjusted at 250 °C by the heater disposed around the outer periphery of the cylindrical member, and nitrogen gas was flown through the purification apparatus at a flow velocity of 2.1 cm/sec. thereby accomplishing a desorption operation for hydrogen fluoride adsorbed to the adsorbent (sodium fluoride).

Further, the same adsorption step at which hydrogen fluoride is adsorbed to the adsorbent and the same desorption step for hydrogen fluoride were carried out by 15 times, in which measurements of the differential pressure and the hydrogen fluoride concentration were made at each of 15 times. As shown in Table 1, even in case that the above steps were repeatedly carried out by 15 times, a large differential pressure was not developed between the gas inlet A and the gas outlet B of the purification apparatus in the tray-type purification apparatus. Additionally, the hydrogen fluoride concentration at the gas outlet B was not more than 1000 ppm at each of 15 times.

From these results, it will be understood that hydrogen fluoride can be effectively removed preventing blockade in the purification apparatus by using the tray-type purification apparatus.

### [Comparative Example 1]

A purification performance test was carried out in the same conditions as those in Example 1 with the exception that the vertical filled purification apparatus (640 g of sodium fluoride as the adsorbent was compactly filled as it is).

As a result, in the vertical filled purification apparatus, the hydrogen fluoride concentration at the gas outlet B was not more than 1000 ppm at each of 15 times; however, the differential pressure became not lower than 10000 Pa so that complete blockade was made at the sixth time in the repeated times.

From [Example 1] and [Comparative Example 1], it is apparent that the tray-type purification apparatus has an equal purification performance to that of the vertical filled purification apparatus, and is hard to cause blockade.

**[Table 1]**

| | | Developed differential pressure [Pa] (after flowing for15 hours) | | | | | | |
|---|---|---|---|---|---|---|---|---|
| Using times | | 1 | 2 | 3 | 4 | 5 | 10 | 15 |
| Comparative Example 1 | Vertical type | 133 | 399 | 665 | 2660 | 4389 | - | - |
| Example 1 | Tray-type | 2 | 5 | 3 | 4 | 0 | 5 | 4 |

### EXPLANATION OF REFERENCE NUMERALS

- 100: fluorine gas generating system
- 1: electrolysis tank
- 2: fluorine gas supply system
- 3: by-product gas supply system
- 4: outside apparatus
- 5: raw material supply system
- 7: anode
- 8: cathode
- 11a: first gas chamber
- 12a: second gas chamber
- 15: first main passage
- 17: first pump
- 31: second pump
- 20: purification apparatus
- 211: tray-like member
- 211a: bottom plate section
- 211b: outer periphery side wall section
- 211c: cutout side wall section
- 211d: upper end opening section
- 212: cutout section

## Claims

1. A fluorine gas generating system for generating fluorine gas by electrolyzing hydrogen fluoride in a molten salt containing hydrogen fluoride, **characterized by** comprising:
an electrolysis tank in which hydrogen fluoride is electrolyzed in an electrolysis bath including the molten salt containing hydrogen fluoride to generate a main-product gas whose main component is fluorine gas at an anode side and a by-product gas whose main component is hydrogen gas at a cathode side; and
a purification apparatus in which hydrogen fluoride mixed in the main-product gas is removed by an adsorbent,
wherein the purification apparatus includes
a cylindrical member through which the main-product gas passes,
a temperature regulator for regulating a temperature of the cylindrical member, and
an adsorbent holder disposed inside the cylindrical member, the adsorbent holder being disposed to form an aperture for securing a flow passage of the main-product gas inside the cylindrical member.

2. A fluorine gas generating system as claimed in Claim 1, **characterized in that** the adsorbent holder includes plural or more adsorbent holders disposed to meander the flow passage of the main-product gas.

3. A fluorine gas generating system as claimed in Claim 1 or 2, **characterized in that** the adsorbent holder is a tray-like member, the tray-like member including a bottom plate section formed with a cutout section for allowing gas to flow therethrough, an outer periphery side wall section disposed standing at outer periphery of the bottom plate section except for the cutout section, and a cutout side wall section disposed standing at a cutout section side of the bottom plate section, and an upper end opening section of a main body of the tray-like member, and **in that** the outer periphery side wall section is disposed to internally contact with inner wall of the cylindrical member.

4. A fluorine gas generating system as claimed in Claim 3, **characterized in that** the bottom plate section is formed with a through-hole.

5. A fluorine gas generating system as claimed in Claim 3 or 4, **characterized in that** the adsorbent holder includes plural or more adsorbent holders disposed separate from each other in the cylindrical member, wherein a distance between the tray-like member and the adjacent tray-like member is not less than 1/5 of inner diameter of the cylindrical member and less than the inner diameter of the cylindrical member.

6. A fluorine gas generating system as claimed in any of Claims 3 to 5, **characterized in that** an area of the bottom plate section formed with the cutout section is not less than 50 % and not more than 95 % of an area of an inner diameter section of the cylindrical member.
